# EUROPEAN PATENT APPLICATION

(11) **EP 2 341 307 A1**
(43) Date of publication of application: **06.07.2011**
(21) Application number: 09015840.3
(22) Date of filing: 22.12.2009
(51) Int. Cl.: F27B 3/04, F27B 15/00, F27D 17/00, C21B 13/14

(54) **Method and apparatus for continuous combined melting and steel making**

(71) Applicant: Tata Steel IJmuiden BV, 1970 CA IJmuiden (NL)
(72) Inventor: Pronker, Wiebe Feije, 2371 DG Roelofarendsveen (NL)
(74) Representative: Blauw, Frans Gerard

(57) **Abstract**

The invention relates to a process and apparatus for producing molten metal comprising the steps and the means to pre-reduce the metal, feeding pre-reduced metal, coal and an oxygen containing gas to a melting-combustion device, receiving molten metal coming from the melting-combustion device in a container, feeding the combustion off-gasses from the melting-combustion device to the metal pre-reducing unit, wherein the combustion off-gasses before feeding it to the metal pre-reducing unit is fed through a coal bed contained in a reactor and wherein the coal is conveyed through the reactor and fed to the melting-combustion device. Said part of the invention produces molten metal in a continuous and controllable rate and is combined with a reactor or reactors to refine the molten metal to a liquid alloy of desired composition. One application of the invention can be to convert iron ore into pig iron and subsequently into liquid steel in one continuous process.

## Description

The invention relates to a process and an apparatus for producing steel or a steel precursor product, directly from iron ores in a continuous or semi-continuous manner.

At present the most widely applied method for steelmaking is through the route of blast furnace to produce pig iron which is fed to a basic oxygen furnace to convert the pig iron to steel. In the process most of the iron ore has to be formed into pellets or sinters and coal has to be formed into coke in order to be suitable for the process in the blast furnace. The coke and sinter plants needed for that purpose mean extra expenditure and energy loss and bring a number of environmental problems.

For some time tests have been done with direct smelting processes of which some are already in commercial operation.

One of these processes is known as the HIsmelt Process which was developed by Rio Tinto at Kwinana in Western Australia. In the HIsmelt process a smelt reduction vessel is used which takes over the function of a blast furnace. Iron ore fines and coal are injected into the bath where the iron ore fines are reduced instantly on contact with carbon dissolved in the bath. This reaction produces iron (Fe) and carbon monoxide (CO). Hot air at 1200°C, which is enriched with oxygen, combusts the gases generated in the bath, therewith generating combustion energy which is transferred to the bath. However since the hot air is introduced from a considerable distance above the bath the transfer of the combustion energy to the molten metal is far from optimal because of the slag layer on top of the molten metal. Furthermore the combustion off-gasses have high temperatures of over 1300°C which makes them unsuitable for use in a direct reduction unit and they have a high dust content which makes them unsuitable for a high efficiency boiler.

Other known direct smelting process are the FINEX and COREX smelting-reduction processes, which has been developed by Voest-Alpine Industrieanlagenbau (VAI), Austria. The installation used in the Finex and Corex processes have two reactors, a series of fluidized beds or reduction shaft for the (pre-) reduction and a melter-gasifier vessel for the melting of the pre-reduced iron. The fluidized bed reactors or the reduction shaft is placed above the melter-gasifier vessel and reduced iron bearing material is transferred to the melter-gasifier vessel where it is melted and carburized by injection of both coal and oxygen. Also those processes have the disadvantage of a poor heat transfer to the molten metal in the bath, resulting in high carbon usage.

An objective of the invention is to provide an iron melting process wherein the combustion off-gasses resulting from a melting-combustion device are suitable to be used for direct reduction of iron.

A further objective is to provide a continuous or semi-continuous process of pig iron.

A further objective is to provide a continuous or semi-continuous process for producing molten steel or a molten steel precursor product.

Another objective is to provide an apparatus suitable to carry out the process of continuous or semi-continuous production of molten steel or a molten steel precursor product making.

One or more of the above objectives are realized by providing a process for producing molten metal comprising the steps of:
- pre-reducing the metal in a metal (ore) pre-reducing unit,
- feeding pre-reduced metal, coal and an oxygen containing gas to a melting-combustion device,
- receiving molten metal coming from the melting-combustion device in a container,
- feeding the combustion off-gas from the melting-combustion device to the metal pre-reducing unit,
- wherein the combustion off-gas before feeding it to the metal pre-reducing unit is fed through a coal bed contained in a reactor.

The term "metal" used in the text will mean one or more of the terms metal, metal ore, metal ore fines and metal dust depending on the context wherein the term is used, which will be self-explanatory for the skilled person. Where any specific metal is mentioned this shall also include where appropriate one or more of the terms for the specific metal ore, the specific metal ore fines and the specific metal dust.

The melting-combustion device is a device wherein coal is combusted to which end the device is provided with means to supply coal and means to provide an oxygen containing gas necessary for the combustion of the coal. In all circumstances, the coal is supplied in excess of the amount of oxygen to generate a reducing flame. The metal or pre-reduced metal is fed directly in the flame of the coal combustion resulting in an immediate melting of the metal. The melting-combustion device according to the invention provides an efficient way to melt the metal requiring a minimal amount of energy in comparison with other systems to produce molten metal.

A second aspect is the controllability of the afore mentioned melting - combustion device: The supply of metal can be stopped or limited at an instant, independent of the oxygen and coal supply. This aspect enables the continuous or semi-continuous processing from pig iron to steel.

The off-gasses resulting from the melting-combustion device have high temperatures typically of over 1300°C which makes it unsuitable for use in the direct reduction of iron. Those high temperatures have the risk of melting a metal such as iron in the pre-reducing unit as a result of which the molten metal could stick to the walls of the pre-reducing unit.

By feeding the off-gasses through a coal bed the temperature of the off-gasses will be lowered as a result. It is also possible to inject coal or coal fines in the off-gas stream as an alternative of feeding the off-gasses through a coal bed to reduce the temperature of the off-gasses. Preferably the temperature is lowered to a temperature at which the off-gasses can be guided into the pre-reducing unit without the chance that the metal to be reduced could start to melt in the pre-reducing unit. With iron being the metal to be reduced the temperature of the gas will be, dependent of the temperature of the metal, at most 1100°C.

The reaction of the off-gasses with the coal or coal fines has the following effects:
1) Coal is pyrolized or hydrolyzed to form predominantly carbon and hydrogen. The ratio between the two is determined by the quality of the injected coal.
2) The carbon reacts with carbon dioxide in the off-gas according to the following equation:

   C + CO2 => 2CO

   Above 800 °C, the right hand part of this equation is the stable form. Above 1300 °C, this reaction takes place at a high rate.
3) Both effects 1) and 2) are endothermic, leading to rapid cooling of the off gas.

The resulting off-gas has a higher caloric or heating value and can be used as combustion gas or, as in the process according to the invention, the cooling of the off-gas can be such that it can be used as a reducing gas in the iron production process. Preferably the combustion off-gas is cooled to a temperature of 1100° C or lower before entering the pre-reducing unit.

The amount of chemical and/or thermal energy to (pre-) reduce the metal ore is larger than the amount of energy in the off gas from the combustor. To provide at least part of the further energy needed for the reduction, according to a further aspect of the invention it is provided that an oxygen containing gas is fed through the coal bed. The amount of the oxygen containing gas fed through the coal bed is adjusted to have by itself or in combination with the off-gasses a desired or sufficient amount of energy for the reduction process. By feeding an amount of oxygen containing gas through the coal bed a coal gasifier is realized.

In addition, calcium oxide, calcium carbonate, calcium carbide or magnesium fines can be mixed with or co-injected with the coal or coal fines to bind the sulphur from the coal.

According to a further aspect of the invention, at least part of the coal can be conveyed through the reactor, and after being pre-treated (carbonized) in the reactor the coal or resulting carbon can be fed to the melting-combustion device. In this respect pre-treating the coal means that the coal is at least partly pyrolized and/or hydrolyzed and/or part of the coal has reacted with the off-gasses to form CO. This way, at least part of the coal is used as an increased value fuel in melting-combustion device.

The reactor used to pre-treat the coal and/or as a coal gasifier is for instance a fluidized bed or a toroidal reactor such as a so called TORBED reactor (TORBED is the registered trademark of Mortimer Technology Holdings Ltd., UK).

According to a further aspect of the invention the amount of coal in the reactor and/or the conveying velocity of the coal through the reactor and the optional oxygen containing gas injection is controlled in order to control the temperature of the combustion off-gasses entering the pre-reducing unit.

The combination of a melting-combustion device and a reactor wherein coal is pre-treated for use in the melting-combustion device and/or coal is gasified has the advantage that a very high temperature flame can be used for the fast melting of the pre-reduced metal. This leads to high off-gas temperatures of about 1500 °C or higher which in the reactor to pre-treat the coal is reduced to a temperature of about 1100 °C or below before entering the pre-reducing unit.

By controlling the amount of coal and the conveying velocity thereof through the reactor to pre-treat the coal and/or the amount of oxygen containing gas being injected in the off gas - coal bed, control over the temperature of the off-gasses coming from the melting-combustion device can be realised:
- In the melting-combustion device, the ratio between oxygen and carbon can be adjusted for an optimal melting process. A high carbon ration will lead to more carbon monoxide production, a more reducing flame and a lower flame temperature. A lower carbon ration leads to the production of more carbon dioxide and a higher flame temperature.
- In the reactor to pre-treat the coal, the amount of coal determines the cooling rate of the off-gasses. At least part of the carburized coal from the reactor to pre-treat the coal can be used in the melting-combustion device to get maximal flame temperatures. The remainder can be gassified in the reactor.

A further advantage is that the off-gas when cooled becomes enriched with respect to carbon monoxide over carbon dioxide therewith increasing the reduction potential of the off-gas.

Preferably the melting-combustion device is pressurized. The advantage is that the gas volumes are smaller compared to ambient pressure gas reactors. Further, with an otherwise closed reaction vessel a pressure higher than ambient pressure will be established in the reaction vessel which will drive the off-gasses from the melting-combustion device through the reactor to pre-treat the coal and into the pre-reducing unit.

According to a further aspect of the invention the metal is iron and the container for molten metal is part of a number of interconnected reaction vessels or part of a tunnel shaped reaction vessel divided in successive sections wherein the molten iron is treated in a number of steps to molten steel or a molten steel precursor product.

With the melting-combustion device, the reactor to pre-treat the coal, the pre-reducing unit and the reaction vessel or vessels a semi-continuous or continuous and fully controllable hot metal production process can be realized.

According to still a further aspect it is provided that in the successive interconnected reaction vessels or the sections of the tunnel shaped reaction vessel the step of melting-combustion and one or more of the steps of de-sulphurizing, de-silicating, de-phosphating, de-carburation and alloying are carried out. To this end the vessels or sections are provided with slag separator means to enable these different process steps.

The process according to the invention has clear advantages over the widely used steel making process that is performed in batch processing in different ladle reactors, that is hot metal ladles, converters and steel ladles. To name a few advantages of the process according the invention:
- The amount of liquid metal can be significantly reduced (there are no ladles in waiting) leading to less energy loss.
- There are no waiting (hot) empty ladles, leading to less energy loss.
- The installation can be much smaller and more compact since the amount of hot metal in process is much less.
- Less hot metal in process leads to quicker response times on requests for different qualities of steel.
- Quality control can be more precise since in a continuous process, small adaptations can be made and monitored, keeping other parameters constant.
- Refractory in the different reactor segments is not subjected to thermal variations or thermal shocks as in present operations.
- Transports and hoisting can be avoided, including the costly provisions and high operating cost there off.
- Continuous steel refining can be coupled with continuous casting without in between buffers in casting distribution ladles. This will lead to additional energy and equipment savings.

With the process in interconnected reaction vessels or in the sectioned tunnel shaped reaction vessel the off-gasses coming from the different reaction vessels or the different sections of the tunnel shaped reaction vessel can be combined with the off-gas from the melting-combustion device. This saves additional gas treatment equipment and enables a maximum utilisation of thermal and chemical energy in the off-gas of specifically a vessel or converter section. Because of the stationary configuration of the connected reaction vessels or tunnel shaped reaction vessel the provisions for off-gas combination can be realised relatively simple.

According to a further aspect the invention also provides an apparatus suitable to carry out the process for the production of molten steel or a molten steel precursor product comprising:
- an iron pre-reducing unit,
- a melting-combustion device with supply means for pre-reduced iron, supply means for coal and/or pre-treated coal and supply means for an oxygen containing gas,
- a container for molten iron, and
- a reactor to pre-treat coal with the combustion off-gas from the melting-combustion device, wherein the reactor to pre-treat coal is positioned between an outlet of the container for molten iron and the iron pre-reducing unit.

According to a further aspect of the invention the apparatus is provided with supply means for an oxygen containing gas to feed oxygen containing gas through the coal bed contained in the reactor. With the supply means for an oxygen containing gas the reactor can also at least partly be used as a coal gasification reactor.

The discharge end of the melting-combustion device is in open connection with one of the reaction vessels or one of the sections of the tunnel shaped reaction vessel, which means that part of the heat of the combustion will directly be transferred to the molten metal bath in the tunnel shaped reaction vessel. The reactor for pre-treating and/or gassifying coal is positioned between said reaction vessel or said section of the tunnel shaped reaction vessel and the iron pre-reducing unit.

According to a further elaboration of the invention the container for molten iron is part of a number of interconnected reaction vessels or part of a tunnel shaped reaction vessel divided in a number of successive sections. This set-up allows to perform the necessary process steps in a number of interconnected vessels or sections without having the need of extra transport means to transport hot metal from one separate vessel to the next separate vessel.

Interconnected successive reaction vessels are obtained by placing these reaction vessels against each other or at a short distance from each other wherein the vessels connect through corresponding openings in the reaction vessels or by connecting openings in the reaction vessel to a duct between successive reaction vessels. The openings are placed below the level of the steel in the vessels when in operation so that only the molten metal can pass to the next vessel while the slag floating on the molten metal is kept in the respective reaction vessels. In a similar manner the upper parts of the reaction vessel are connected so that the off-gasses of the different process steps can all flow to the reaction vessel to which the melting-combustion device connects.

According to a further aspect the tunnel shaped reaction vessel is sectioned by barrier elements across the width of the tunnel shaped reaction vessel, leaving a free space beneath and above the barrier elements. The level of molten metal and slag in the tunnel shaped reaction vessel is maintained at a height such that the barrier elements prevent slag from flowing from one section to another while the molten metal can freely flow underneath the barrier elements from one section to a successive section. At the same time the spaces above the slag in each of the sections are connected so that the off-gasses from one section can combine with the off-gasses from the other sections and flow to the section of the tunnel shaped reaction vessel to which the melting-combustion device connects and from there successively to the reactor to pre-treat and/or gassify coal and to the pre-reducing unit.

The barrier elements are necessary to maintain different conditions in the successive sections to be able to carry out the different steps in the steel making process. For de-sulphurizing, different conditions are necessary with respect to additives and slag composition compared to the de-silicating, de-phosphating and de-carburation. Different conditions can be created and maintained when each reaction vessel or each section receives at a continuous rate its own additives and when slag does not pass through from one reaction vessel or section into another reaction vessel or section. More specifically, to de-sulphurize one or more additives such as magnesium, calcium oxide, calcium carbonate or calcium carbide should be added. To de-carburate the molten metal oxygen is blown on the hot metal surface or carbon dioxide is bubbled through the hot metal. Phosphor and silicium can be removed by supplying specific binding additives in one of the reaction vessels or sections.

According to a further aspect of the invention it is provided that at least one reaction vessel or one of the sections of the tunnel shaped reaction vessel is provided with means to remove slag from the section. Since slag in a reaction vessel or section of the tunnel shaped reaction vessel is kept in that particular reaction vessel or section it is necessary to be able to remove from time to time or continuously a part of the slag from said reaction vessel or section to prevent slag build up and to be able to add further additives necessary in the control of the steel making process. In operation the pressure inside the interconnected reaction vessels or the sectioned tunnel shaped reaction vessel is higher than ambient pressure which facilitates the removal of slag with overflow means driven by the higher pressure in the interconnected reaction vessels or the tunnel shaped reaction vessel.

Further at least one of the reaction vessels or one of the sections of the tunnel shaped reaction vessel is provided with supply means to supply additives to the molten iron, steel or steel precursor product to be able to perform the necessary steps in the steel making process. For the same reason one of the reaction vessels or one of the sections of the tunnel shaped reaction vessel is provided with an oxygen lance for the decarburization of the molten metal.

According to another aspect of the invention a reaction vessel or a section of the tunnel shaped reaction vessel is connected to a collecting vessel by means of an outlet positioned beneath the level of the slag on top of the molten iron in said reaction vessel or said section of the tunnel shaped reaction vessel when in operation. With a pressure in the interconnected reaction vessels or the tunnel shaped reaction vessel higher than ambient pressure a steel collecting vessel or ladle can be used wherein the outlet is an open flow through opening below the slag level in the reaction vessel or in the tunnel shaped reaction vessel and wherein the level of the steel is hydrostatically elevated with regard to the level of the steel in the reaction vessel or in the tunnel shaped reaction vessel. This prevents the necessity of a liquid metal control valve which can, with current technology, not be made with sufficient life time to be economically viable. The pressure in the interconnected reaction vessels or the tunnel shaped reaction vessel is maintained by control of the supply rate of the oxygen containing gas and coal in the melter - combustor and/or of the oxygen containing gas in the coal gasifier unit and a gas outlet control device in the off gas of or after the iron reduction unit.

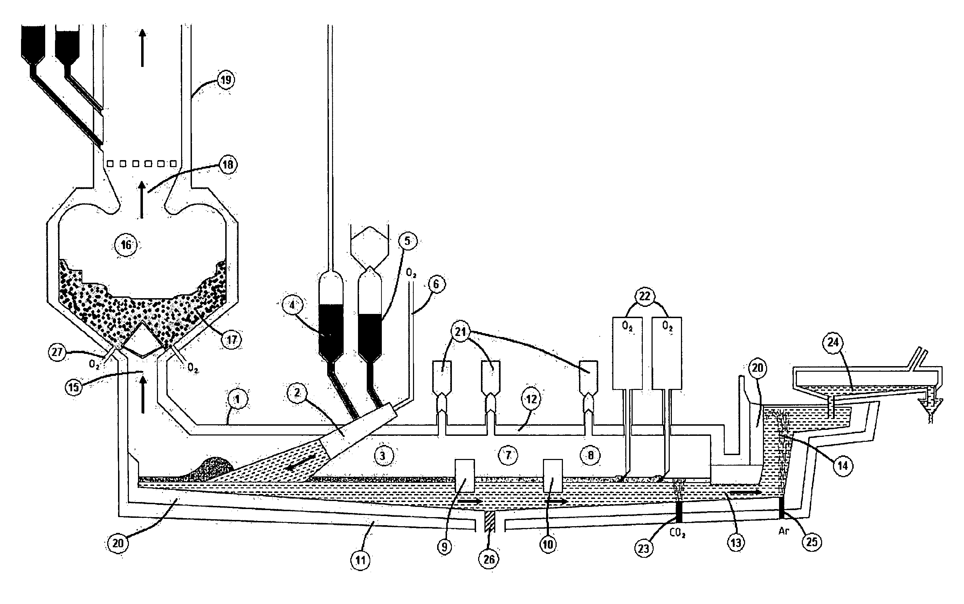

The invention is further elucidated on hand the apparatus shown in the drawing by way of example.

In the drawing a tunnel shaped reaction vessel 1 is shown with a melting-combustion device 2 in a first section 3 of the tunnel shaped reaction vessel 1. The melting-combustion device 2 is provided with a supply 4 for pre-reduced iron-ore, a supply 5 for coal, preferably pre-treated coal, and a supply 6 for an oxygen containing gas. The melting-combustion device 2 is in open connection with the first section 3 of the tunnel shaped reaction vessel at relatively short distance above the bath of molten metal and slag in the tunnel shaped reaction vessel 1. This will result in that the heath of the combustion is easily transferred to the molten metal which as a consequence can easily be kept within a desired temperature range.

In the given example the tunnel shaped reaction vessel 1 has three successive sections 3, 7, 8 which are separated by means of barrier elements 9, 10. These barrier elements leave a free space between the bottom part 11 and upper part 12 of the tunnel shaped reaction vessel 1. This allows the molten metal to flow underneath the barrier elements while the slag on the molten metal in the different sections remain in those separate sections. Further, the off-gasses resulting from the different steps in the steel making process in the successive sections 3, 7, 8 can collect and be expelled from the tunnel shaped reaction vessel 1 through a single exhaust 15.

The last section 8 is connected through a flow through opening 13 to a collecting vessel 14 for the molten steel or steel precursor product. The flow through opening 13 is below the level of the molten metal in the tunnel shaped reaction vessel 1 and the process is controlled to keep that level within a certain range above the flow through opening 13. The vessel 14 is shaped to be able to contain molten metal at a level above that in the tunnel shaped reaction vessel 1.

The off-gasses of the melting-combustion device 2 together with the off-gasses of the other sections 7, 8 leave the tunnel shaped reaction vessel 1 at the exhaust 15 located in first section 3 at an outer end of tunnel shaped reaction vessel 1. The exhaust 15 directly connects to a reactor 16 containing a coal bed 17 and an oxygen containing gas supply 27 wherein coal is gassified and/or pre-treated for use in the melting-combustion device 2.

The amount of off-gasses produced in the process in the tunnel shaped reaction vessel 1 and in the reactor 16 with coal bed 17 and oxygen containing gas supply 27 together with a load in the exhaust off-gasses of a pre-reduction reactor on the one hand and the load of the molten metal in collecting vessel 14 by way of flow through opening 13 on the other hand results in that the process in the tunnel shaped reaction vessel 1 can be controlled to operate under pressure.

The reactor to cool down the combustor off gas and to pre-treat and/or to gassify coal shown in the drawing is a torodial reactor wherein the coal is pyrolized or hydrolized and reacts with the coal dioxide in the off-gasses and/or the oxygen in the oxygen containing gas supply. Before being totally converted by the off-gasses or totally gassified, (part of) the coal can be conveyed from reactor 16 through supply line 5 to melting-combustion device 2.

After passing through coal bed 17 in reactor 16 the off-gasses leave reactor 16 through exhaust opening 18 entering a pre-reducing unit 19. At this point the off-gasses will be cooled to at least 1100°C and at least part or preferably most of the CO2 content in the off-gasses will be converted into CO. In the pre-reducing unit 19 the metal or more specifically the iron to be used in the steel making process in tunnel shaped reaction vessel 1 is pre-reduced and subsequently conveyed and supplied through supply line 4 to the melting-combustion device 2.

The tunnel shaped reaction vessel 1 and collecting vessel 14 are provided at the inside with refractory work 20 as far as necessary.

At the top of tunnel shaped reaction vessel 1 supply means 21 for additives are provided for sections 3, 7, 8 to supply the additives required in the steel making process. These supply means are provided with air lock means to prevent that the overpressure inside the tunnel shaped reaction vessel 1 is reduced or lost when adding the additives.

Last section 8 is provided with oxygen lances 22 to de-carburise the hot metal, by blowing oxygen on the hot metal surface. As an alternative through supply line 23 carbon dioxide can be bubbled through the hot metal.

From the collection vessel 14 the molten metal is fed directly or through a buffer container 24 to a casting or continuous casting apparatus. Since in the collection vessel 14, alloying additives (like e.g. titanium or manganese) and active reacting additives (like e.g. aluminium and calcium) are added, stirring of the hot metal in the vessel is necessary. To that end a supply line 25 for an inert gas, such as Argon, is provided at the bottom of the vessel. By bubbling gas from the bottom or somewhere near the bottom of the vessel the content of the vessel can effectively be stirred. As an alternative electromagnetic stirring means can be provided.

At the bottom 11 the tunnel shaped reaction vessel 1 is provided with a discharge opening 26 that can be opened in case of a calamity that necessitates the discharge of the molten metal from the tunnel shaped reaction vessel 1.

## Claims

1. Process for producing molten metal comprising the steps of:
- pre-reducing the metal in an metal pre-reducing unit,
- feeding pre-reduced metal, coal and an oxygen containing gas to a melting-combustion device,
- receiving molten metal coming from the melting-combustion device in a container,
- feeding the combustion off-gas from the melting-combustion device to the metal pre-reducing unit,
- wherein the combustion off-gas before feeding it to the metal pre-reducing unit is fed through a coal bed contained in a reactor.

2. Process according to claim 1, wherein an oxygen containing gas is fed through the coal bed contained in the reactor.

3. Process according to claim 1 or 2, wherein coal is conveyed through the reactor, and after being pre-treated in the reactor by the passing of combustion off-gas through the coal, the coal is fed to the melting-combustion device.

4. Process according to one or more of claims 1-3, wherein the amount of coal in the reactor and/or the conveying velocity of the coal through the reactor is controlled in order to control the temperature of the combustion off-gas entering the pre-reducing unit.

5. Process according to one or more of claims 1-4 wherein the metal is iron and the container for molten metal is part of a number of interconnected reaction vessels or part of a tunnel shaped reaction vessel wherein the molten iron is treated in a number of steps in successive reaction vessels or sections of the tunnel shaped reaction vessel to molten steel or a molten steel precursor product.

6. Process according to claim 5, wherein in the successive interconnected reaction vessels or in the successive sections of the tunnel shaped reaction vessel the step of melting-combustion and one or more of the steps of de-sulphurizing, de-silicating, de-phosphating, de-carburation and alloying are carried out.

7. Apparatus for the production of molten steel or a molten steel precursor product comprising:
- an iron pre-reducing unit,
- a melting-combustion device with supply means for pre-reduced iron, supply means for coal and/or pre-treated coal and supply means for an oxygen containing gas,
- a container for molten iron, and
- a reactor to pre-treat coal with the combustion off-gas from the melting-combustion device, wherein the reactor to pre-treat coal is positioned between an outlet of the container for molten iron and the iron pre-reducing unit.

8. Apparatus according to claim 7, wherein supply means for an oxygen containing gas are provided to feed oxygen containing gas through the coal bed contained in the reactor.

9. Apparatus according to claim 7 or 8, wherein the container for molten iron is part of a number of interconnected reaction vessels or part of a tunnel shaped reaction vessel divided in a number of successive sections.

10. Apparatus according to one or more of claims 7-9, wherein the tunnel shaped reaction vessel is sectioned by barrier elements across the width of the tunnel shaped reaction vessel, leaving a free space beneath and above the barrier elements.

11. Apparatus according to one or more of claims 7-10, wherein the discharge end of the melting-combustion device is in open connection with one of the reaction vessels or one of the sections of the tunnel shaped reaction vessel.

12. Apparatus according to one or more of claims 7-11, wherein the reactor for pre-treating coal is positioned between the first reaction vessel or the first section of the tunnel shaped reaction vessel and the iron pre-reducing unit.

13. Apparatus according to one or more of claims 7-12, wherein at least one reaction vessel or one of the sections of the tunnel shaped reaction vessel is provided with means to remove slag from the section.

14. Apparatus according to one or more of claims 7-13, wherein at least one reaction vessel or one of the sections of the tunnel shaped reaction vessel is provided with supply means to supply additives to the molten iron or steel, and wherein one reaction vessel or one of the sections of the tunnel shaped reaction vessel is provided with an oxygen lance.

15. Apparatus according to one or more of claims 7-14, wherein a reaction vessel or a section of the tunnel shaped reaction vessel is connected to a collecting vessel by means of an outlet positioned beneath the level of the slag on top of the molten iron in said reaction vessel or said section of the tunnel shaped reaction vessel when in operation.
